# EUROPÄISCHE PATENTSCHRIFT

(11) **EP 0 464 574 B1**
(45) Veröffentlichungstag und Bekanntmachung des Hinweises auf die Patenterteilung: **11.01.1995**
(21) Anmeldenummer: 91110412.3
(22) Anmeldetag: 24.06.1991
(51) Int. Cl.: F16B 13/08, F16B 13/00

(54) **Befestigungselement**
Fastening element
Elément de fixation

(30) Priorität: 25.06.1990 CH 2104/90
(43) Veröffentlichungstag der Anmeldung: 08.01.1992
(73) Patentinhaber: Vereinigte Drahtwerke AG, CH-2501 Biel (CH)
(72) Erfinder: Regensburger, Werner, CH-Rebstein (CH)
(74) Vertreter: Blum, Rudolf Emil Ernst

(56) Entgegenhaltungen:
- DE-A- 2 246 833
- DE-A- 3 333 493
- FR-A- 1 369 178
- GB-A- 2 212 581
- US-A- 4 626 139

## Beschreibung

Die vorliegende Erfindung betrifft ein Befestigungselement, das einen Schaft mit einem Kopfende und einem Fussende und mindestens ein den Schaft umringendes Verankerungsglied zur Verankerung des Befestigungselementes in einer in einem Bauteil ausgebildeten Oeffnung aufweist, welches Verankerungsglied einen vom Schaft getrennten Ringkörper aufweist, der über eine Arrtieranordnung gegen eine axiale Bewegung relativ zum Schaft auf demselben arretiert ist und die Form eines auf dem Schaft sitzenden Hohlkegels aufweist. Ein solches Befestigungselement ist aus DE-A-3 333 493 bekannt.

Solche Befestigungselemente sind üblicherweise einstückig ausgebildete Erzeugnisse aus Kunststoff. Dabei ändert sich die Form und die Ausführung solcher Befestigungselemente je nach dem vorgesehenen Einsatz, nicht zuletzt vom Material des Bauteils, in welches ein Befestigungselement jeweils einzusetzen ist. Daraus ergibt sich, dass zur Herstellung solcher unterschiedlicher Befestigungselemente eine grosse Anzahl unterschiedlicher Werkzeuge, z.B. Spritzgussformen notwendig ist, welches die Herstellung des einzelnen Befestigungselementes verteuert. Weiter weisen die bekannten Befestigungselemente den Nachteil auf, dass Verankerungsglied und Schaft aus demselben Werkstoff hergestellt sind, welches entsprechend der Herstellung Grenzen setzt, indem z.B. der Schaft und die Verankerungsglieder aus demselben Werkstoff bestehen müssen.

In der FR-A-1,369,178 ist ein Befestigungselement offenbart, welches einen Schaft und ein den Schaft umringendes Verankerungsglied aufweist. Der Schaft ist als Schraubbolzen mit einer Erweiterung beim Schaftende ausgebildet und wird durch das Anziehen einer Mutter relativ zum Verankerungsglied derart verschoben, dass die Erweiterung am Schaftende das Verankerungsglied aufweitet, so dass es gegen die Wand der Bohrung, in welcher es eingesetzt ist, gepresst wird. Dieser Schraubvorgang ist zeitaufwendig, und weiter kann dieses Befestigungselement nicht einfach mit Hammerschlägen in die Bohrung hineingetrieben werden.

Hier will die Erfindung Abhilfe schaffen. Die Erfindung, wie sie in den Ansprüchen gekennzeichnet ist, löst die Aufgabe, ein Befestigungselement zu schaffen, bei dem das jeweilige Verankerungsglied auf einem Schaft aufgereiht ist und als von demselben getrenntes Bauteil ausgebildet ist.

Die durch die Erfindung erreichten Vorteile sind im wesentlichen darin zu sehen, dass Verankerungsglieder aus einem vom Schaft verschiedenen Material bestehen können und dass mit einer und derselben Ausführung eines Schaftes unterschiedlich ausgebildete Verankerungsglieder verwendet werden können, womit Herstellungskosten gesenkt werden können.

Im folgenden wird die Erfindung anhand von mehrere Ausführungswege darstellenden Zeichnungen näher erläutert.

Es zeigt:
Figur 1 eine Seitenansicht eines Befestigungselementes,
Figur 2 eine Ausführung zur Verwendung mit hochfesten Verankerungsstoffen, und
Figur 3 eine Ausführung eines Verankerungsgliedes mit einem sägezahnförmig strukturierten Aussenmantel.

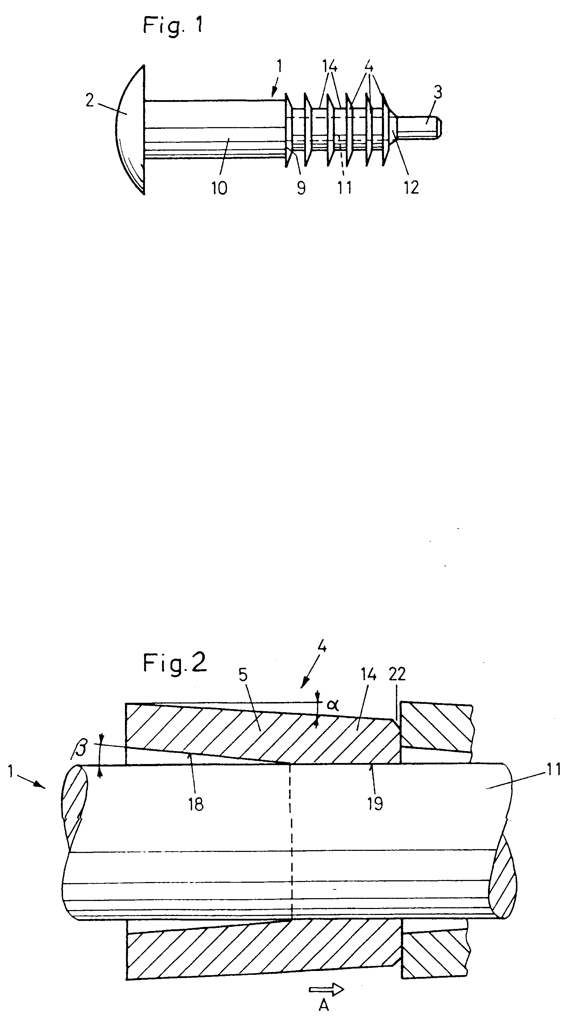

Die Figuren 1 und 2 beziehen sich auf Gegenstände, die nicht der Erfindung entsprechen, sie dienen jedoch zur Erläuterung.

Das in der Figur 1 gezeigte Befestigungselement weist einen Schaft 1 mit einem Kopfende 2 auf, welches Kopfende 2 bei dieser Ausführung derart ausgebildet ist, dass das Befestigungselement mittels Hammerschlägen in eine Oeffnung in einem Bauteil hineingetrieben werden kann. Der Schaft 1 weist anschliessend am Kopfende 2 einen ersten Abschnitt 10 auf, der, wie aus der Zeichnung ersichtlich ist, glattwandig ist, welcher erste Abschnitt 10 von einem strichliniert gezeichneten zweiten Abschnitt 11 gefolgt ist. Entsprechend ist zwischen dem ersten Abschnitt 10 und dem zweiten Abschnitt 11 eine als Anschlag 9 wirkende Stufe im Schaft 1 vorhanden. Der Schaft 1 endet schliesslich beim Fussende 3. Auf dem zweiten Abschnitt 11 des Schaftes 1 ist nun eine Anzahl scheibenförmiger Verankerungsglieder 4 aufgereiht.

Bei hochfesten Stoffen, in denen das Befestigungselement zu verankern ist, z.B. Stahlbeton, ist die in der Figur 2 gezeigte Ausführung besonders vorteilhaft. Das Verankerungsglied 4 liegt hier in der Form einer Keilhülse vor, bzw. sind mehrere solcher Keilhülsen auf einem zweiten Abschnitt 11 des Schaftes 1 des Befestigungselementes aufgereiht.

Das Verankerungsglied 4 weist einen kegelstumpfförmigen Aussenmantel auf. Innen weist es einen kegelstumpfförmigen Innenmantelabschnitt 18 auf, welcher von einem zylinderförmigen Innenmantelabschnitt 19 gefolgt ist. Damit ist dieses Verankerungsglied 4 wieder aus einem sich im jeweiligen Rand der Oeffnung verankernder Ringkörper 5, einstückig gefolgt von einem Distanzstück 14 gebildet.

Die Keilhülsensteife kann durch eine geeignete Wahl des Stoffes und auch der jeweiligen Dicke gewählt werden. Ein solches Befestigungselement kann schon mit einem oder zwei solcher Verankerungsglieder 4 ausgerüstet seinen Zweck vollständig erfüllen.

Die Einsetzrichtung des Befestigungselementes ist in der Figur 2 mit dem Pfeil A angedeutet. Das Distanzstück 14 weist in Einsetzrichtung stirnseitig eine Fase 22 auf, um das Einschlagen in ein z.B. vorgebohrtes Loch im Beton zu vereinfachen. Bei der gezeichneten Ausführung beträgt der Winkel α zwischen dem Befestigungselement 3° und der Winkel β zwischen dem Innenmantel des Ringkörpers 5 und der Parallelen zur Längsachse 5°. Dieses stellt beim Eintreiben des Befestigungselementes in ein Loch im Beton eine durch die Elastizität des Verankerungsgliedes 4 entstehende grosse Radialkraft gegen die Innenwand der Oeffnung sicher, so dass ein sicheres Verkeilen des Befestigungselementes im jeweiligen Loch stattfindet.

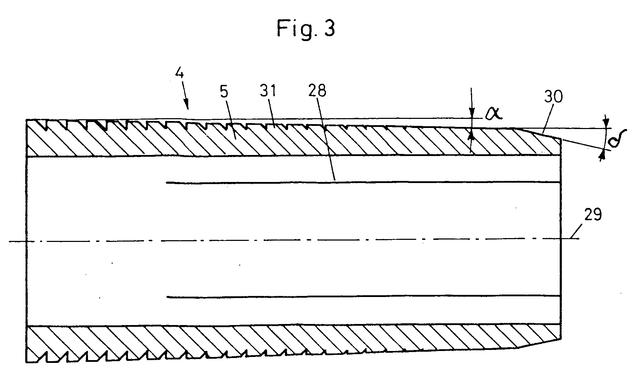

In der Figur 3 ist eine Ausführung des Verankerungsgliedes gemäss der Erfindung dargestellt. Dieses Verankerungsglied ist wieder hülsenförmig entsprechend dem Verankerungsglied der Ausführung nach Figur 2. Auch hier kann ein jeweiliges Befestigungselement mit nur einem oder dann mit mehreren solcher Verankerungsgliedern ausgerüstet sein.

Die Querschnittsform der Ausführung nach der Figur 3 kann beispielsweise gleich irgend einer Querschnittsform sein. Die gezeigte Form des Aussenmantels ist derart, dass in Längsrichtung eine grosse Anzahl Vorsprünge 5 vorhanden sind, so dass der Aussenmantel des Verankerungsgliedes 4 nach Figur 3 mindestens entlang einem Teil seiner Längsausdehnung sägezahnförmig strukturiert ist, wie mit der Bezugsziffer 31 angedeutet ist.

Das mittige Loch, d.h. die axiale Durchbohrung dieses hülsenförmigen Verankerungsgliedes 4 ist flachwandig dargestellt. Offensichtlich kann es ebenfalls irgendwelche Querschnittsform aufweisen, wobei bei allen Ausführungen diese Querschnittsform vorteilhaft derjeniger des Schaftes 11 entspricht, so dass das Verankerungsglied 4 drehfest auf dem jeweiligen Schaft 1 sitzt. Als besonders günstige Ausführung hat sich die Ausbildung gezeigt, bei welcher die Querschnittsform des Aussenumfanges des Verankerungsgliedes derjenigen seines mittleren Loches und damit auch derejenigen des Schaftes 1 entspricht.

Analog zur Fase 22 der Ausführung nach Figur 2 weist die Ausführung nach Figur 3 einen Endabschnitt mit einem Aussenmantelabschnitt 30 auf, der relativ zur Längsmittelachse um einen Winkel δ schiefwinklig verläuft, wobei dieser Winkel δ grösser als der Winkel ist, um den der Aussenmantel des Verankerungsgliedes 4 schiefwinklig zur Längsmittelachse 29 verläuft.

Bei dieser Ausführung sind zwei von z.B. drei Schlitzen 28 zu sehen, die den Ringkörper 5 durchsetzen. Offensichtlich kann nur ein Schlitz oder dann eine Vielzahl solcher Schlitze 28 vorhanden sein.

## Patentansprüche

1. Befestigungselement, das einen Schaft (1) mit einem Kopfende (2) und einem Fussende (3) und mindestens ein den Schaft (1) umringendes Verankerungsglied (4) zur Verankerung des Befestigungselementes in einer in einem Bauteil ausgebildeten Oeffnung aufweist, welches Verankerungsglied (4) einen vom Schaft (1) getrennten Ringkörper (5) aufweist, der über eine Arretieranordnung gegen eine axiale Bewegung relativ zum Schaft (1) auf demselben arretiert ist, dadurch gekennzeichnet, dass der Ringkörper (5) die Form eines auf dem Schaft sitzenden, axial langgestreckten hülsenförmigen Hohlkegels aufweist, dessen Aussenmantel einen in einer jeweiligen Oeffnung einsetzseitig vorlaufenden Endabschnitt mit einem Aussenmantelabschnitt (30) aufweist, der relativ zur Längsmittelachse (29) um einen Winkel (δ) schiefwinklig verläuft, der grösser als der Winkel (α) des restlichen zur Längsmittelachse (29) schiefwinklig verlaufenden Aussenmantels ist.

2. Befestigungselement nach Anspruch 1, dadurch gekennzeichnet, dass der Aussenmantel des Verankerungsgliedes sägezahnförmig (31) strukturiert ist.

3. Befestigungselement nach Anspruch 1 oder 2, dadurch gekennzeichnet, dass das Verankerungsglied (4) mindestens einen Längsschlitz (28) aufweist, der mindestens entlang einem Teil der axialen Ausdehnung des Verankerungsgliedes (4) verläuft.

## Claims

1. Fastening element, which comprises a shaft (1) with a head end (2) and a foot end (3) and at least one anchoring member (4) surrounding the shaft (1), for an anchoring of the fastening element in an opening formed in a structural member, which anchoring member (4) includes an annular body (5) separate of the shaft (1) and which is locked on the shaft (1) by a locking arrangement against a relative axial movement thereto, characterized in that the annular body (5) has the shape of an axially elongate, sleeve-shaped hollow cone sitting on the shaft, of which the outer jacket includes an end portion at the leading area relative to the direction of insertion in a respective opening with an outer jacket portion (30) which extends relative to the longitudinal centre axis (29) obliquely at an angle (δ) which is larger than the angle (α) of the rest of the outer jacket extending obliquely relative to the longitudinal centre axis (29).

2. Fastening element according to claim 1, characterized in that the outer jacket of the anchoring member is structured in a sawtooth-like (31) manner.

3. Fastening element according to claim 1 or 2, characterized in that the anchoring member (4) includes at least one longitudinal slot (28) which extends at least along a part of the axial extent of the anchoring member (4).

## Revendications

1. Elément de fixation avec un fût (1), une extrémité postérieure formant tête (2) et une extrémité antérieure (3) et au moins un organe d'ancrage (4) entourant le fût (1) pour maintenir l'élément de fixation dans une cavité formée dans un élément de construction, l'organe d'ancrage (4) comprenant un corps annulaire (5) séparé du fût (1) et dont le mouvement axial par rapport à celui-ci est bloqué sur le fût (1) par un dispositif de blocage, caractérisé en ce que le corps annulaire (5) est une douille conique creuse allongée en direction axiale et disposée sur le fût, dont la surfce extérieure comporte à son extrémité antérieure dans la direction d'insertion dans la cavité un chanfrein extérieur (30) incliné par rapport à l'axe longitudinal (29) d'un angle (8) supérieur à l'angle (α) que fait le restant de ladite surface extérieure inclinée par rapport à l'axe longitudinal (29).

2. Elément de fixation selon la revendication 1, caractérisé en ce que la surface extérieure de l'organe d'ancrage présente une structure en dents de scie (31).

3. Elément de fixation selon les revendications 1 ou 2, caractérisé en ce que l'organe d'ancrage (4) dispose d'une fente longitudinale (28), qui court le long au moins d'une partie de l'extension axiale de l'organe d'ancrage.
